# FASCICULE DE BREVET EUROPEEN

(11) **EP 0 627 295 B1**
(45) Date de publication et mention de la délivrance du brevet: **06.08.1997**
(21) Numéro de dépôt: 94201484.6
(22) Date de dépôt: 25.05.1994
(51) Int. Cl.: B29C 47/00, B29C 47/88, B29C 47/20, B29K 23/00

(54) **Procédé pour l'extrusion directe et en continu de structures tubulaires biorientées en polymères cristallisables**
Verfahren zur kontinuierlichen Extrusion von biorientierten Rohrstrukturen aus kristallisierbaren Polymeren
Method for the continuous extrusion of bioriental tubular structures of crystallizable polymers

(30) Priorité: 04.06.1993 BE 9300567
(43) Date de publication de la demande: 07.12.1994
(73) Titulaire: SOLVAY (Société Anonyme), B-1050 Bruxelles (BE)
(72) Inventeur: Gilliard, Pierre, B-1120 Bruxelles (BE); Dehennau, Claude, B-1410 Waterloo (BE); Vandevelde, Désiré, B-1120 Bruxelles (BE)
(74) Mandataire: Meyers, Liliane

(56) Documents cités:
- EP-A- 0 344 860
- WO-A-92/11125
- FR-A- 2 314 047
- US-A- 4 056 591

## Description

La présente invention concerne un procédé pour l'extrusion directe et en continu de structures tubulaires biorientées telles que des tubes en polymères qui sont susceptibles de cristalliser et, en particulier, en polyoléfines.

Les techniques industrielles actuelles de biorientation de polymères font appel principalement à des déformations qui sont induites à des températures qui sont inférieures au point de fusion des polymères. Lors de telles déformations, la structure cristalline de ces polymères est brisée au profit d'une nouvelle structure qui est orientée sous l'effet de contraintes importantes.

Ces techniques sont couramment utilisées dans le cas de stuctures de faible épaisseur telles que des films. Par contre, l'application de cette technique à des produits épais entraîne de sérieuses difficultés. En effet :
- des forces importantes ou des pressions élevées doivent être mises en jeu, ce qui implique la nécessité de recourir à des installations de puissance installée élevée,
- les déformations devant être effectuées à une température bien précise dans toute l'épaisseur du produit, le conditionnement thermique de produits épais exige un temps très long et des installations de traitement importantes.

Pour remédier à ces inconvénients dans le cas de la production de structures tubulaires, il a également été proposé (A. K. TARAIYA & I. M. WARD - Plastics, Rubber and Composites Processing and Applications 1991, Vol. 10, n° 1, pages 5 à 11) de réaliser de telles structures tubulaires biorientées par tirage au travers d'une filière divergente d'un tube porté à une température inférieure à son point de fusion. Il semble toutefois que ce procédé ne permet pas d'atteindre aisément des taux de déformation élevés. En outre, dans le cas d'une mise en oeuvre de stuctures en polyoléfine, pour un résultat de la multiplication des taux d'étirage des longitudinaux et transversaux inférieur à 10, il semble impossible d'augmenter le produit des modules de traction longitudinaux et transversaux d'un facteur supérieur à 6. Cette dernière considération est d'importance dans le cas d'une production de tubes car elle limite sévèrement les rapports épaisseur/diamètre accessibles pour des tubes biorientés ayant des modules de traction longitudinaux et transversaux, une tension de rupture et une composition déterminés.

Il a été enfin proposé de recourir à une alternative plus séduisante qui implique une extrusion directe et contrôlée du polymère au travers d'une filière convergente conique.

Ainsi, dans les brevets US-A-4,053,270 et 4,680,156, on propose d'extruder du polyéthylène ou du polypropylène à une température très légèrement supérieure à leur température de fusion (135 °C pour le polyéthylène et 160 °C pour le polypropylène) à une très faible vitesse (1 cm/min) au travers d'une filière convergente conique qui est maintenue à un gradient de température critique. De cette façon, après étirage, en fondu, dans la région d'entrée de la filière la solidification et la cristallisation du polymère sont initiées dans la filière de façon à maintenir l'orientation induite par étirage. Dans un tel procédé, la pression règnant en filière peut être réduite par coextrusion d'un polymère à plus bas point de fusion (polyéthylène de basse densité). Ce procédé conduit à des produits (fils, bandelettes) qui sont monoorientés axialement et dont les propriétés sont seulement améliorées dans le sens longitudinal.

Outre, le fait qu'un tel procédé est difficilement transposable à la production de structures tubulaires, il entraîne une série d'inconvénients.

La cristallisation du polymère constitutif étant obtenue par gradient thermique dans le parallèle de la filière, le point de cristallisation peut fluctuer d'amont en aval dans la filière. Il en résulte que le procédé peut être instable. Si, suite à une perturbation quelconque en cours de production, la cristallisation est légèrement accélérée la pression d'extrusion s'élève ce qui accélère encore la cristallisation et entraîne rapidement un blocage dans la filière. Par contre, si la cristallisation est trop lente, l'orientation induite disparaît par relaxation et le produit perd les propriétés mécaniques conférées par l'étirage.

En outre, la vitesse d'extrusion et donc la productivité sont faibles et les produits obtenus étant monoorientés restent donc fragiles dans le sens transversal.

Selon une variante de réalisation qui est décrite dans la demande de brevet EP-A-151,343, on peut éviter une relaxation de l'orientation induite en exerçant une traction importante (> 10 MPA) sur l'extrudat à sa sortie de la filière.

Toutefois, dans un tel procédé les produits obtenus restent toujours monoorientés et le risque d'une rupture de l'extrudat impose une vitesse d'extrusion très lente limitée à quelques millimètres par seconde. Enfin, ce procédé ne peut être appliqué directement à la production de structures tubulaires.

La présente invention a, dès lors, pour objet de fournir un procédé d'extrusion de structures tubulaires conduisant de façon directe, sure et efficace à une biorientation moléculaire. Il est entendu que la structure tubulaire obtenue peut être ouverte et mise en forme entre deux cylindres conditionnés thermiquement pour en faire une plaque.

La présente invention concerne un procédé pour l'extrusion directe et en continu de structures tubulaires biorientées en polymères cristallisables qui comporte les étapes suivantes :
- on met en oeuvre, par extrusion, un polymère cristallisable présentant une distribution de poids moléculaires telle que le rapport entre son poids moléculaire moyen en poids et son poids moléculaire moyen en nombre soit au moins égal à 10,
- durant son extrusion, on soumet ledit polymère à un étirage biaxial à vitesse d'étirage sensiblement constante par passage au travers d'une filière annulaire divergente de profil hyperbolique, le polymère fondu pénétrant dans ladite filière étant préalablement conditionné thermiquement à une température supérieure à sa température de fusion mais inférieure à sa température de cristallisation sous l'étirage biaxial induit par ladite filière, les températures de fusion et de cristallisation étant déterminées pour la valeur de pression règnant à l'entrée de la filière annulaire divergente,
- on soumet ensuite la structure biorientée ainsi produite à une réfrigération rapide pour amener sa température à une température inférieure à son point de cristallisation à pression atmosphérique, cette réfrigération étant réalisée, en l'absence de déformations, par passage de la structure au travers d'une section de filière droite annulaire subséquente de manière à parfaire la cristallisation induite durant l'étirage biaxial.

Le procédé conforme à l'invention peut être appliqué à tout polymère qui est susceptible de cristalliser et, en particulier, aux polyoléfines telles que notamment le polyéthylène, le polypropylène et les polymères dérivés de l'éthylène et/ou du propylène.

Dans le procédé conforme à l'invention, on met de préférence en oeuvre des polymères ayant une large distribution de poids moléculaires ce qui a pour effet de réduire la sensibilité du procédé vis-à-vis de la température. Cette largeur de distribution peut, par exemple, être obtenue naturellement ou par bi-ou plurimodalité par exemple en choisissant de mettre en oeuvre un mélange de deux ou plusieurs polymères ayant des poids moléculaires moyens très différents.

Il apparaît, en effet, que la présence de certaines fractions de bas poids moléculaire dans le polymère mis en oeuvre peut se révéler très favorable car elle permet de maintenir une certaine fluidité au polymère mis en oeuvre durant sa cristallisation du fait que celles-ci présentent une température de cristallisation nettement inférieure à celle des fractions de poids moléculaire plus élevé. En utilisant un polymère à distribution très large, seule la fraction de haut poids moléculaire cristallise lors de l'étirage et se comporte alors à la manière d'une charge dans la partie non cristallisée qui reste plus fluide.

Il est également préférable de mettre en oeuvre des polymères très visqueux. A cet effet, on préfère mettre en oeuvre des polymères ayant un indice de fluidité sous 21,6 kg inférieur à 10 selon la norme ASTM D 1238 (1990) (g, 10 min).

Dans le procédé conforme à l'invention, il est hautement préférable d'effectuer l'étirage biaxial par passage dans une filière annulaire divergente de profil hyperbolique de façon telle que cet étirage se fasse à gradient de vitesse en traction moyenne sur la section de passage sensiblement constant. De fait, lors d'un étirage réalisé dans une filière divergente de profil rectiligne, on constate que le gradient de vitesse en traction moyenne sur la section de passage, imposé au polymère extrudé croît fortement depuis son entrée jusqu'à sa sortie. De ce fait, la cinétique de cristallisation, qui dépend exponentiellement de la vitesse d'étirage, est concentrée sur la portion terminale de la filière. Il en résulte, dès lors, que tout le début de l'étirage est perdu et que, la cristallisation étant très rapide, des fluctuations de cinétique risquent de conduire à des blocages du polymère dans ladite filière. Par contre, le recours à une filière de profil hyperbolique conduit à un gradient de vitesse en traction plus constant et donc à une cristallisation plus régulière. Il a aussi été constaté qu'une filière de profil hyperbolique permet de pouvoir imposer des taux d'étirage plus faibles pour un même gain en propriétés mécaniques en ce qui concerne les structures tubulaires produites.

De fait, dans le procédé conforme à l'invention, on étire biaxialement le polymère lors de son passage dans la filière annulaire divergente et durant sa cristallisation de manière à obtenir un produit dont la morphologie cristalline est constituée par un entrecroisement biaxial de structures aciculaires et dont les propriétés mécaniques sont, dès lors, améliorées tant dans le sens axial que dans le sens transversal en fonction de la géométrie de la filière annulaire divergente utilisée.

En outre, dans ce procédé, la synchronisation entre l'étirage biaxial et la cristallisation permet, de façon surprenante, d'obtenir, pour des taux d'étirage identiques, une amélioration plus élevée des propriétés mécaniques que celle pouvant être atteinte par les procédés antérieurs.

Cette synchronisation peut être mise en évidence en disposant deux jauges de pression directement en amont et en aval de la filière annulaire divergente. Dans ce cas, une forte augmentation (plusieurs centaines de pourcents) de la perte de charge dans cette section de la filière, par rapport à la situation dans laquelle le polymère reste fondu et amorphe durant l'étirage, indique une cristallisation dans cette zone. La perte de charge constatée (de l'ordre de quelques centaines de bars) reste toutefois nettement inférieure à celle (plusieurs milliers de bars) qui serait constatée dans le cas d'une solidification du polymère dans cette zone.

Dans le procédé conforme à l'invention, on assure donc de manière stable des conditions de mise en oeuvre telles que ce soit l'étirage dans la filière annulaire divergente qui déclenche la cristallisation du polymère et non un refroidissement du polymère. Afin d'éviter une cristallisation par voie thermique, l'étirage doit donc être réalisé alors que le polymère se trouve à une température supérieure à sa température de fusion, dans les conditions de pression régnant à l'entrée de la filière annulaire divergente. De ce fait, la synchronisation, a priori difficile à réaliser, entre l'étirage et la cristallisation du polymère devient parfaite et le point de cristallisation du polymère est fixe par rapport à la filière, ce qui élimine tout risque de blocage du polymère dans la filière annulaire divergente.

Par température de fusion on entend désigner la température pour laquelle la vitesse de fusion du polymère est maximum.

Cette température peut être déterminée soit par une mesure DSC (Differential Scanning Calorimetry) effectuée à la pression adéquate soit lors d'une mesure PVT (Pressure Volume Temperature).

Par la température de cristallisation, on entend désigner celle qui entraîne une augmentation de plus de 100 % de la pression d'extrusion pour un refroidissement de moins de 5 °C.

La détermination de la température de cristallisation sous étirage peut se faire :
- par mesure de la différence de pression entre l'entrée et la sortie de la filière annulaire divergente,
- par extrusion du polymère dans un rhéomètre capillaire dont le convergent réalise un étirage monoaxial de taux et de vitesse analogues à ceux de l'étirage biaxial exercé par la filière annulaire divergente utilisée dans le procédé selon l'invention.

Lors des mesures des températures de fusion et de cristallisation sous étirage on constate de façon normale que la température de cristallisation est généralement supérieure de quelques degrés à la température de fusion.

Dans le procédé conforme à l'invention, il importe que le polymère pénétrant dans la filière annulaire divergente soit conditionné thermiquement de façon à se trouver dans les conditions de température qui doivent être impérativement respectées car le polymère fondu délivré lors d'une extrusion classique se trouve généralement à une température trop élevée pour pouvoir être cristallisé par étirage.

Ce conditionnement thermique peut être réalisé par tout moyen tel que par exemple un réglage strict de la température du polymère le long de son parcours dans l'extrudeuse par l'intermédiaire d'éléments chauffant et/ou refroidissant judicieusement répartis.

Un moyen préféré par la demanderesse pour garantir un conditionnement thermique précis consiste à procéder par division de l'extrudat dans des échangeurs thermiques concentriques à entrefers minces disposés dans le parcours du polymère directement en amont de la filière annulaire divergente. De cette façon on peut en effet obtenir un refroidissement rapide, homogène, important et très précis du polymère délivré par l'extrudeuse.

Dans le procédé conforme à l'invention, il est également avantageux de fixer la température de la filière annulaire divergente à une valeur supérieure de 1 à 5 °C à celle du polymère pénétrant dans celle-ci. En procédant de cette façon, il apparaît, en effet, que l'on peut obtenir, en cours de production, une stabilisation automatique de la cristallisation induite par l'étirage. Ainsi, par exemple, s'il apparaît en cours de production, que le polymère introduit dans la filière annulaire divergente se trouve accidentellement à une température légèrement trop basse, la pression de ce polymère dans la filière augmente et par voie de conséquence son débit au travers de ladite filière est ralenti. Il en résulte, dès lors, que la filière, suite au ralentissement du débit, peut induire un réchauffement du polymère et, dès lors, compenser et résorber la perturbation.

Dans le procédé conforme à l'invention, la structure biorientée et cristallisée débitée par la filière annulaire divergente doit être réfrigérée rapidement pour amener sa température à une température inférieure à son point de cristallisation afin d'éviter tout relâchement de sa biorientation, de parfaire la cristallisation induite durant l'étirage biaxial et de provoquer la solidification progressive de la structure tubulaire débitée.

Cette réfrigération peut avantageusement être obtenue, en l'absence de toute déformation, par passage de cette structure au travers d'une section de filière droite annulaire subséquente qui est équipée de moyens de réfrigération appropriés.

Afin d'écarter toute tendance au blocage de la struture refroidie et en voie de solidification, il peut se révéler avantageux de prévoir une lubrification des parois de la filière.

Cette lubrification peut être réalisée par différentes voies.

Ainsi, on peut, par exemple, utiliser une filière dont les parois sont rendues glissantes par un traitement préalable adéquat tel que, par exemple, un revêtement de résine fluorée TEFLON®.

Selon une autre variante, on peut injecter en divers endroits de la filière un lubrifiant tel que par exemple une huile de silicone de viscosité appropriée. Cette injection peut, par exemple, être effectuée via des fentes annulaires prévues sur le pourtour des parois interne et/ou externe de la filière. Il convient d'accorder la préférence à des lubrifiants qui sont fluides à température ambiante de façon à faciliter leur élimination ultérieure.

Selon une autre variante, on peut incorporer un lubrifiant dans le polymère mis en oeuvre, ce dernier migrant en cours de production vers l'extérieur de l'extrudat.

Le procédé conforme à l'invention est, en outre, illustré par l'exemple de réalisation pratique qui suit.

### Exemple

On a alimenté une extrudeuse équipée d'un échangeur de chaleur et d'une filière conforme au procédé selon l'invention par un polyéthylène de haute densité ayant les caractéristiques suivantes :
HLMI (21,6 KG) = 2,5
Module de traction isotrope : 1000 MPa
Température de fusion à 200 bars = 138 °C
Température de début de cristallisation : 155 °C (sous un étirage à gradient de vitesse uniaxial de 0,1 S⁻¹ et une pression de 200 bars)

Les conditions d'extrusion ont été réglées de façon telle que la température du polymère à la sortie de l'échangeur s'élève à 151 °C et on a thermostatisé la filière annulaire divergente à une température de 154 °C.

La géométrie de la filière annulaire divergente, préalablement revêtue de résine fluorée TEFLON®, a été choisie de façon telle que le polymère soit étiré sous un gradient de vitesse constant, moyenné sur la section de passage, de 0,1 S⁻¹ dans le sens longitudinal, que les taux d'étirage longitudinaux et transversaux soient respectivement de 4 et de 2 et que la stucture tubulaire quittant cette filière présente un diamètre externe de 15 cm et une épaisseur de 2 mm.

La réfrigération directe de la structure produite a été assurée par passage de cette structure au travers d'une section de filière droite annulaire subséquente, également revêtue de résine fluorée TEFLON®, d'une longueur de 10 cm maintenue à 80-90 °C.

La lubrification au niveau de la filière a été assurée par injection d'un film d'une épaisseur de 1 à 10 microns d'huile de silicone.

Durant cet essai, qui a été réalisé sous une pression d'extrusion totale de 500 bars, on a constaté qu'une structure tubulaire a été produite de façon très stable et durable avec une vitesse de production de 50 cm/min.

On a en outre constaté que la structure produite présente, à 23 °C, un module de traction de 4300 MPa dans le sens longitudinal et de 3000 MPa dans le sens transversal.

## Revendications

1. Procédé pour l'extrusion directe et en continu de structures tubulaires biorientées en polymères cristallisables, comportant les étapes suivantes :
- on met en oeuvre, par extrusion, un polymère cristallisable présentant une distribution de poids moléculaires telle que le rapport entre son poids moléculaire moyen en poids et son poids moléculaire moyen en nombre soit au moins égal à 10,
- durant son extrusion, on soumet ledit polymère fondu à un étirage biaxial à vitesse d'étirage sensiblement constante par passage au travers d'une filière annulaire divergente de profil hyperbolique, le polymère fondu pénétrant dans ladite filière étant préalablement conditionné thermiquement à une température supérieure à sa température de fusion mais inférieure à sa température de cristallisation sous l'étirage biaxial induit par ladite filière, les températures de fusion et de cristallisation étant déterminées pour la valeur de pression règnant à l'entrée de la filière annulaire divergente,
- on soumet ensuite la structure biorientée ainsi produite à une réfrigération rapide pour amener sa température à une température inférieure à son point de cristallisation à pression atmosphérique, cette réfrigération étant réalisée, en l'absence de déformations, par passage de la structure au travers d'une section de filière droite annulaire subséquente de manière à parfaire la cristallisation induite durant l'étirage biaxial.

2. Procédé selon la revendication 1, caractérisé en ce que le polymère est une polyoléfine.

3. Procédé selon la revendication 1, caractérisé en ce que le polymère présente un indice de fluidité sous 21,6 kg inférieur à 10.

4. Procédé selon la revendication 1, caractérisé en ce que le polymère pénétrant dans la filière annulaire divergente est préalablement conditionné par division dans des échangeurs thermiques concentriques à entrefers minces disposés dans le parcours du polymère directement en amont de la filière annulaire divergente.

5. Procédé selon la revendication 1, caractérisé en ce que la température de la filière annulaire divergente est maintenue à une température supérieure de 1 à 5 °C à celle du polymère pénétrant dans celle-ci.

6. Procédé selon la revendication 1, caractérisé en ce que les parois de la filière sont rendues glissantes par un traitement préalable.

7. Procédé selon la revendication 1, caractérisé en ce qu'on injecte un lubrifiant en divers endroits de la filière.

8. Procédé selon la revendication 1, caractérisé en ce qu'on met en oeuvre un polymère contenant un lubrifiant.

9. Procédé selon les revendications 1 à 8, caractérisé en ce que la structure tubulaire est ouverte et mise en forme entre deux cylindres conditionnés thermiquement pour en faire une plaque.

## Claims

1. Process for the direct continuous extrusion of biaxially oriented tubular structures made of crystallizable polymers, which includes the following steps:
- a crystallizable polymer, having a molecular weight distribution such that the ratio between its weight-average molecular weight and its number-average molecular weight is at least equal to 10, is processed by extrusion;
- during its extrusion, the said molten polymer is subjected to biaxial drawing at a substantially constant draw rate by passing through a divergent annular die of hyperbolic profile, the molten polymer penetrating the said die being thermally conditioned beforehand at a temperature above its melting temperature but below its crystallization temperature under the biaxial drawing induced by the said die, the melting and crystallization temperatures being determined for the value of pressure existing at the inlet of the divergent annular die,
- next, the biaxially oriented structure thus produced is subjected to rapid cooling in order to bring its temperature to a temperature below its crystallization point at atmospheric pressure, this cooling being carried out, in the absence of deformation, by passing the structure through a subsequent annular straight die section so as to perfect the crystallization induced during the biaxial drawing.

2. Process according to Claim 1, characterized in that the polymer is a polyolefin.

3. Process according to Claim 1, characterized in that the polymer has a melt index under 21.6 kg of less than 10.

4. Process according to Claim 1, characterized in that the polymer penetrating the divergent annular die is conditioned beforehand by being split up in concentric heat exchangers with narrow gaps arranged along the path of the polymer directly upstream of the divergent annular die.

5. Process according to Claim 1, characterized in that the temperature of the divergent annular die is maintained at a temperature of 1 to 5°C above that of the polymer penetrating this die.

6. Process according to Claim 1, characterized in that the walls of the die are rendered slippery by a prior treatment.

7. Process according to Claim 1, characterized in that a lubricant is injected at various points in the die.

8. Process according to Claim 1, characterized in that a polymer containing a lubricant is processed.

9. Process according to Claims 1 to 8, characterized in that the tubular structure is open and shaped between two rolls which are thermally conditioned in order to make a sheet therefrom.

## Patentansprüche

1. Verfahren zur direkten und kontinuierlichen Extrusion von biorientierten Rohrstrukturen aus kristallisierbaren Polymeren, das die folgenden Schritte umfaßt:
- durch Extrusion verarbeitet man ein kristallisierbares Polymer, das eine solche Molekulargewichtsverteilung aufweist, daß das Verhältnis zwischen dem Gewichtsmittel seines Molekulargewichts und dem Zahlenmittel seines Molekulargewichts wenigstens gleich 10 ist,
- während seiner Extrusion unterzieht man besagtes geschmolzenes Polymer einem biaxialen Recken bei ganz konstanter Reckgeschwindigkeit mittels Durchgang durch eine divergente Ringdüse mit hyperbolischem Profil, wobei das geschmolzene Polymer, das in besagte Düse eindringt, vorher auf eine Temperatur, die höher als seine Schmelztemperatur, aber niedriger als seine Kristallisationstemperatur unter dem durch besagte Düse bewirkten biaxialen Recken ist, thermisch konditioniert wird, wobei die Schmelz- und Kristallisationstemperaturen für den am Eingang der divergenten Ringdüse herrschenden Druck bestimmt werden.
- dann unterwirft man die so hergestellte biorientierte Struktur einer schnellen Abkühlung, um ihre Temperatur auf eine Temperatur zu bringen, die niedriger als ihr Kristallisationspunkt unter Atmosphärendruck ist, wobei dieses Abkühlen ohne Verformungen mittels Durchgang der Struktur durch einen nachfolgenden ringförmigen geraden Düsenabschnitt durchgeführt wird, um die während des biaxialen Reckens induzierte Kristallisation zu vervollständigen.

2. Verfahren gemäß Anspruch 1, dadurch gekennzeichnet, daß das Polymer ein Polyolefin ist.

3. Verfahren gemäß Anspruch 1, dadurch gekennzeichnet, daß das Polymer unter 21,6 kg einen Fließindex kleiner 10 aufweist.

4. Verfahren gemäß Anspruch 1, dadurch gekennzeichnet, daß das Polymer, das in die divergente Ringdüse eindringt, vorher durch Verteilung in konzentrischen Wärmetauschern mit dünnen Luftspalten, die auf dem Weg des Polymers direkt vor der divergenten Ringdüse angeordnet sind, thermisch konditioniert wird.

5. Verfahren gemäß Anspruch 1, dadurch gekennzeichnet, daß die Temperatur der divergenten Ringdüse auf einer Temperatur gehalten wird, die 1 bis 5 °C höher ist als diejenige des in diese eindringenden Polymers.

6. Verfahren gemäß Anspruch 1, dadurch gekennzeichnet, daß die Wände der Düse durch eine Vorbehandlung gleitend gemacht werden.

7. Verfahren gemäß Anspruch 1, dadurch gekennzeichnet, daß man an verschiedenen Stellen der Düse ein Gleitmittel einspritzt.

8. Verfahren gemäß Anspruch 1, dadurch gekennzeichnet, daß man ein Polymer verwendet, das ein Gleitmittel enthält.

9. Verfahren gemäß den Ansprüchen 1 bis 8, dadurch gekennzeichnet, daß die Rohrstruktur offen ist und zwischen zwei thermisch konditionierten Walzen geformt wird, um daraus eine Platte zu machen.
